# FASCICULE DE BREVET EUROPEEN

(11) **EP 3 562 981 B1**
(45) Date de publication et mention de la délivrance du brevet: **26.05.2021**
(21) Numéro de dépôt: 17832296.2
(22) Date de dépôt: 22.12.2017
(51) Int. Cl.: D04H 1/4218, B32B 5/26, D04H 1/587, D04H 1/593, D04H 3/04, B32B 13/14, E04C 2/04

(54) **PRODUIT DE SURFACAGE A BAS PCS POUR PLAQUES DE PLÂTRE**
OBERFLÄCHENBEARBEITUNGSPRODUKT MIT NIEDRIGEM PCS FÜR GIPSKARTONPLATTEN
LOW PCS SURFACING PRODUCT FOR PLASTERBOARDS

(30) Priorité: 27.12.2016 FR 1663411
(43) Date de publication de la demande: 06.11.2019
(73) Titulaire: Saint-Gobain Adfors, 92400 Courbevoie (FR)
(72) Inventeur: PREVOTEAU, Alexandre, 75018 Paris (FR); JRIBI, Ramzi, 75012 Paris (FR); CLENET, Jocelyn, 69006 Lyon (FR)
(74) Mandataire: Saint-Gobain Recherche
(86) Numéro de dépôt international: PCT/FR2017/053820
(87) Numéro de publication internationale: WO 2018/122519

(56) Documents cités:
- WO-A1-02/083404
- GB-A- 2 023 687
- US-A1- 2004 209 074
- US-A1- 2012 312 489

## Description

La présente invention concerne un stratifié de deux textiles de verre, destiné à être utilisé pour le surfaçage de plaques de plâtre à des fins de renforcement mécanique, un procédé de fabrication d'un tel stratifié et une plaque de plâtre revêtue, sur au moins une de ses faces, d'un tel stratifié.

Il est connu de fabriquer des plaques de plâtre en appliquant la gâchée sur des supports plats de type papier, film, feuille, textile etc. appelés « surfaçage » (en anglais *facing*) ou « produit de surfaçage ». On connaît en particulier l'utilisation de non-tissés de fibres de verre à la surface de plaques de plâtre.

L'effet de renforcement mécanique des produits de surfaçage de l'état de la technique tels que le papier ou les non-tissés de verre est toutefois assez limité.

Le brevet US 6 547 901 décrit un procédé de fabrication de plaques de plâtre à résistance mécanique renforcée comprenant l'insertion d'une grille ouverte de fils de verre entre la couche de plâtre et une feuille de papier. Dans cette structure, la grille de renforcement est partiellement incorporée dans la surface de la plaque de plâtre ce qui perturbe la continuité et planéité de la surface de la plaque et favorise la pénétration indésirable d'eau dans plaque.

La demande EP 1 385 698 divulgue des stratifiés voile/grille en fibres de verre qui sont utilisés pour le renforcement mécanique de plaques de ciment. Ces stratifiés sont perméables au matériau cimentaire de manière à ce que, dans la plaque durcie, une fine couche de ciment recouvre entièrement le stratifié qui est alors invisible de l'extérieur. La protection contre l'humidité de la plaque finie est assurée par des agents hydrophobes incorporés dans le matériau cimentaire avant la prise du liant hydraulique.

La demande internationale WO 2013/175434 décrit un procédé de fabrication d'un stratifié, destiné au surfaçage de plaques de plâtre, comprenant un voile de verre et un élément de renforcement (film, plaque, textile). Le voile de verre est fixé à l'élément de renforcement au moyen d'une colle qui imprègne à la fois le voile de verre et l'élément de renforcement. Ce document ne donne aucune information concernant la nature chimique de la colle utilisée.

Après séchage de la colle, le stratifié est utilisé en tant que produit de surfaçage de plaques de plâtre, la face « voile de verre » du stratifié étant en contact avec le plâtre. La solution proposée dans ce document souffre toutefois d'une affinité insuffisante entre le plâtre et le produit de surfaçage due à l'imprégnation massive des fibres du voile de verre par le polymère de la colle.

Par ailleurs, on peut supposer que l'utilisation d'une quantité importante de colle organique se traduit par une augmentation excessive du Pouvoir Calorifique Supérieur (PCS) du produit final.

La plupart des pays membres de l'Union Européen ont adopté le système des Euroclasses (EN 13-501-1) classant les matériaux de construction en fonction de leurs performances de réaction au feu. Pour appartenir à l'Euroclasse A1, un produit de surfaçage pour plaques de plâtre doit avoir un PCS, déterminé selon la norme EN ISO 1716 :2010, au plus égal à 2 MJ/m².

Le but de la présente invention est de proposer un produit de surfaçage pour plaques de plâtre qui permet de surmonter les inconvénients des produits de l'état de la technique, à savoir un produit de surfaçage
- qui augmente de manière importante la résistance mécanique des plaques de plâtre dont il recouvre les surfaces,
- qui présente un pouvoir calorifique supérieur (PCS) inférieur ou égal à 2 MJ/m²,
- qui n'augmente pas, et même réduit, la sensibilité à l'eau de la surface de plâtre qu'il recouvre et
- qui présente une bonne affinité avec la plaque de plâtre de manière à prévenir un éventuel délaminage.

Ce but a été atteint grâce à un stratifié formé d'un voile de verre et d'une grille de verre, collés l'un à l'autre au moyen d'une colle à faible PCS contenant une fraction importante de poly(chlorure de vinylidène), le stratifié étant revêtu sur la face « extérieure » (c'est-à-dire celle qui ne viendra pas en contact avec le plâtre) d'un revêtement hydrophobe, également à faible PCS. Ce revêtement hydrophobe est appliqué de manière à ne pas imprégner toute l'épaisseur du stratifié et à laisser à nu la face « intérieure » (c'est-à-dire celle qui viendra en contact avec le plâtre) du stratifié de manière à permettre une adhésion forte entre le plâtre et le produit de surfaçage.

La présente invention a donc pour objet un produit de surfaçage pour plaques de plâtre, comprenant un stratifié voile/grille avec une face « voile » et une face « grille », le stratifié étant formé
(a) d'un voile de fibres de verre lié par un premier polymère organique, de préférence un polymère organique réticulé, appelé ci-après « liant » et
(b) d'une grille de fils de verre liée par un deuxième polymère organique, appelé ci-après « colle », constitué de 50 à 100 % en poids de poly(chlorure de vinyle) (PVDC) ou d'un copolymère à base de chlorure de vinylidène, de 0 à 50 % en poids d'un caoutchouc styrène-butadiène (SBR) et de 0 à 30 % en poids d'une charge minérale, la grille de fils de verre étant collée au voile de fibres de verre au moyen de ladite colle,
le stratifié voile/grille étant revêtu, sur la face « grille », d'une couche continue d'un revêtement hydrophobe contenant
- de 8 à 25 % en poids, de préférence de 9 % à 20 % en poids, en particulier de 10 à 15 % en poids, d'un polymère organique choisi parmi les caoutchoucs styrène-butadiène (SBR), les polymères acryliques, le poly(chlorure de vinylidène) (PVDC), les copolymères à base de chlorure de vinylidène et les mélanges d'au moins deux de ces polymères organiques, et
- de 75 à 92 % en poids, de préférence de 80 à 91 % en poids et en particulier de 85 % à 90 % en poids, de particules minérales, ces pourcentages étant exprimés par rapport à la somme de ces deux composants (polymère organique + particules minérales),
ledit revêtement hydrophobe recouvrant la grille de fils de verre mais laissant à nu la face « voile » du stratifié.

Le voile de verre utilisé dans la présente invention est un textile non-tissé, également appelé intissé, fabriqué par voie humide (*wetlaid*) ou par voie sèche (*drylaid*), par exemple par voie sèche avec cardage (*drylaid carded*) ou par un procédé aérodynamique (*airlaid*).

Lorsqu'il est fabriqué par voie humide, il contient de préférence des fibres de verre d'une longueur pouvant atteindre 150 mm, de préférence comprise entre 20 mm et 100 mm, en particulier entre 50 mm à 70 mm, et qui présentent avantageusement un diamètre compris entre 3 µm et 30 µm, de préférence entre 5 µm et 18 µm.

Le voile de verre non lié présente avantageusement une masse surfacique comprise entre 20 et 200 g/m², de préférence entre 30 et 110 g/m², en particulier entre 50 et 80 g/m².

Le polymère organique utilisé pour lier les fibres de verre du voile de fibres de verre peut en principe être n'importe quel polymère organique permettant, après séchage et durcissement, de conférer au voile de verre une cohésion qui résiste à la mise en contact du voile lié avec de l'eau. Le polymère organique du liant est par conséquent de préférence un polymère thermodurcissable choisi avantageusement parmi les résines urée-formaldéhyde, les résines mélamine-formaldéhyde, les résines phénol-formaldéhyde, les résines acryliques et les mélanges de ces résines, de préférence parmi les résines urée-formaldéhyde. Il est appliqué avantageusement sous forme d'une solution d'oligomères (résines à base de formaldéhyde) ou sous forme de latex (résines acryliques).

Le durcissement du liant du voile de fibres de verre se fait par exemple par chauffage à une température comprise entre 180 et 230 °C pendant une durée comprise entre 5 secondes et 5 minutes, de préférence entre 10 secondes et 2 minutes.

Le liant est appliqué généralement en une quantité, exprimée en matières sèches, comprise entre 10 et 35 % en poids, de préférence entre 15 et 25 % en poids rapporté au poids total du voile de fibres de verre.

Le liant du voile de verre renferme en outre avantageusement des agents retardateurs de flamme choisis parmi les hydroxydes de métaux, hydrates de métaux et carbonates hydratés. On peut citer à titre d'exemples de tels retardateurs de flamme minéraux l'hydroxyde de magnésium (Mg(OH)₂) ou l'hydroxyde d'aluminium (AlO(OH)₃), les plus communément utilisés, ou encore la huntite (3MgCO₃·CaCO₃) et hydromagnésite (4MgCO₃·Mg(OH)₂·4H₂O). Ces retardateurs de flamme se dégradent par réaction endothermique, libérant de l'eau et/ou du CO₂.

La perméabilité à l'air du voile lié (liant durci), mesurée selon la norme NF EN ISO 9237, est avantageusement comprise entre 10 et 200 l/m²/s, de préférence entre 25 et 100 l/m²/s. Pour empêcher la composition d'enduction, servant à former le revêtement hydrophobe, de pénétrer à travers ces ouvertures et d'imprégner les deux faces du stratifié voile/grille de la présente invention il est en effet important que le voile de verre ne comporte pas des ouvertures trop grandes. Comme expliqué en introduction, le fait que la face « voile » du stratifié de la présente invention reste « à nu » est déterminante pour garantir une bonne adhésion entre le produit de surfaçage de l'invention et la plaque de plâtre.

Sur le voile de fibres de verre décrit ci-avant, on colle ensuite une grille de fils de verre (en anglais *glass fiber mesh* ou *glass mesh*). La colle servant à fixer la grille sur le voile de verre sert en outre de liant à la grille, c'est-à-dire une grille de fils de verre non liée est imprégnée d'une composition polymérique (« colle ») et mise en contact, immédiatement après son imprégnation, avec le voile de fibres de verre lié, dont le liant a été préalablement durci.

La colle représente une partie assez importante de la matière organique du produit de surfaçage final et il est par conséquent important de choisir les polymères de cette colle de manière à ce que leur impact négatif sur le PCS du produit final soit le plus faible possible. C'est la raison pour laquelle la colle servant à lier la grille de verre et à la coller sur le voile de verre contient au moins 50 % en poids, rapporté au poids sec total de la colle, de poly(chlorure de vinylidène) (PVDC) ou d'un copolymère à base de chlorure de vinylidène et d'au moins un autre comonomère.

Le ou les autres comonomères du copolymère à base de chlorure de vinylidène sont généralement présents à raison de moins de 25 % en poids du polymère, de préférence à raison de 2 à 20 % en poids et en particulier à raison de 5 à 15 % en poids. Les comonomères sont choisis de préférence dans le groupe constitué d'acrylate de méthyle, acrylate d'éthyle, acrylate de butyle, méthacrylate de méthyle, acrylonitrile, méthacrylonitrile, acides carboxyliques insaturés et chlorure de vinyle.

Le PVDC homopolymère ou copolymère représente avantageusement de 60 à 100 % en poids, de préférence de 70 à 98 % en poids, en particulier de 80 à 97 % en poids et idéalement de 90 à 97 % en poids de la colle, ces pourcentages étant exprimés par rapport au poids total des polymères organiques présents dans la colle.

La colle peut en outre contenir jusqu'à 50 % en poids d'un caoutchouc, ou élastomère, styrène-butadiène (SBR), avantageusement jusqu'à 40 % en poids, de préférence entre 2 et 30 % en poids, en particulier entre 3 et 20 % en poids et idéalement entre 3 et 10 % en poids d'un tel élastomère SBR, ces pourcentages étant exprimés par rapport au poids sec total de la colle.

On utilisera de préférence un élastomère SBR contenant les comonomères styrène et butadiène et comportant en outre des fonctions carboxylate, sous forme anionique.

Dans un mode de réalisation préféré, l'élastomère SBR est un copolymère de styrène-butadiène-méthacrylate autoréticulant portant des fonctions carboxylate anioniques. Ces fonctions carboxylate participent non seulement à la réaction de réticulation, mais elles confèrent au latex une charge globalement négative qui améliore l'adhésion du latex aux fibres de verre. On peut citer à titre d'exemples de latex utilisables en tant qu'élastomères organiques dans le liant de la présente invention les produits de la gamme Litex^{®} S de la société Synthomer, par exemple les latex Litex® S 10656, Litex^{®} S 9074 et Litex^{®} S 9076 ; ou encore les produits Rovène 4019 et Rovène 4176 de la société Mallard Creeks Polymers.

La colle peut contenir en outre jusqu'à 30 % en poids de charges minérales, telles que du carbonate de calcium, qui ont pour principale fonction de réduire le coût et la teneur en matières organiques du produit de surfaçage.

La grille de fils de verre utilisée dans la présente invention est un textile de verre tissé ou un tricot. Il ne s'agit ni d'un non-tissé avec les fils de verre disposés aléatoirement, ni d'une structure de type « *scrim »* dans laquelle les fils de verre sont disposés de manière ordonnée mais en des couches superposées, séparées, sans entrelacement des fils. Une telle structure de type « scrim » ne conviendrait en effet pas à la fabrication d'un stratifié voile/fibre selon l'invention et n'aurait en outre pas la résistance mécanique recherchée.

La grille de fils de verre a une structure plus grossière que le voile de verre, c'est-à-dire les fils, constitués chacun d'une pluralité de filaments individuels, ont un diamètre plus important que les fibres du voile de verre. Par ailleurs les ouvertures de la grille de verre sont plus grandes que celles du voile de verre, et laissent facilement passer la composition d'enduction hydrophobe appliquée ensuite sur la face « grille » du stratifié.

Le diamètre équivalent moyen des ouvertures de la grille de fils de verre est généralement compris entre 2 mm et 12 mm, de préférence entre 3 et 10 mm. On entend par « diamètre équivalent » d'une ouverture de forme rectangulaire ou aléatoire le diamètre du cercle ayant la même surface que l'ouverture de forme rectangulaire ou aléatoire.

Le troisième composant essentiel du produit de surfaçage de l'invention est un revêtement hydrophobe appliqué sur toute la face « grille » du stratifié. Ce revêtement est suffisamment épais pour recouvrir d'une couche continue à la fois la grille de fils de verre et le voile de fibres de verre visible à travers les ouvertures de la grille.

Grâce à cette couche continue de revêtement hydrophobe, le stratifié de la présente invention est imperméable à l'eau liquide et *a fortiori* aux compositions fluides ou pâteuse de plâtre qui seront appliquées sur la face « voile » du produit de surfaçage lors de la fabrication de plaques de plâtre.

La perméabilité à l'air des produits de surfaçage de l'invention est faible, généralement inférieure à 150 L/(m²/s), de préférence inférieure à 120 L/(m²/s) (ISO 9237, pression 1200 Pa).

Leur résistance statique au passage de l'air, mesurée selon la norme ISO 9053, est avantageusement supérieure à 3,0.10⁶ Pa.s/m², voire supérieure à 3,5.10⁶Pa.s/m².

La masse surfacique du revêtement hydrophobe est généralement comprise entre 280 et 500 g/m², de préférence entre 300 et 450 g/m², en particulier entre 310 et 400 g/m².

On entend par revêtement hydrophobe un revêtement présentant une absorption d'eau au bout de deux heures, mesurée par le test Cobb (ISO 535), inférieure à 0,1 g.

Les particules minérales doivent avoir une taille suffisamment fine et une granulométrie suffisamment étroite pour permettre la formation d'une couche d'une épaisseur régulière, même lorsque les particules représentent 90 % ou 92 % en poids du revêtement hydrophobe. Par ailleurs, la taille des particules minérales joue un rôle important dans la viscosité de la composition d'enduction servant à la préparation du revêtement hydrophobe ; plus elle est faible, plus la viscosité de la composition d'enduction est élevée.

On utilisera avantageusement des particules minérales hydrophobes ayant un diamètre moyen (déterminé par granulométrie laser) compris entre 1 µm et 50 µm, de préférence entre 2 µm et 20 µm.

Le caractère hydrophobe du revêtement hydrophobe du stratifié de la présente invention est dû principalement au caractère hydrophobe des particules minérales qui sont avantageusement des particules minérales ayant subi un traitement hydrophobisant, par exemple un greffage de chaînes grasses de type alkyle ou de chaînes de type polydiméthylsiloxane.

La Demanderesse a utilisé avec succès des particules de carbonate de calcium rendues hydrophobes par un greffage de chaînes alkyle, disponibles sous la dénomination commerciale Mikhart C, AC, MU08T, MU12T et MU17T auprès de la société Provençale (Brignole, France).

Les polymères organiques utilisés pour lier ensemble les particules minérales sont choisis parmi les caoutchoucs styrène-butadiène (SBR), les polymères acryliques, le poly(chlorure de vinylidène) (PVDC) homopolymère, les copolymères à base de chlorure de vinylidène et les mélanges d'au moins deux de ces polymères organiques.

Les caoutchoucs styrène-butadiène et les poly(chlorure de vinylidène) homopolymères et copolymères sont ceux décrits ci-avant, utilisés dans la colle de la grille de fils de verre.

Les polymères acryliques utilisables sont avantageusement des latex de polymères à base de (méth)acrylates et/ou d'acide (méth)acrylique, autoréticulants, commercialisés par exemple sous les dénominations commerciales Vinacryl® (Celanese), Acronal® (BASF) et Primal® (Dow).

La masse surfacique du produit de surfaçage est avantageusement comprise entre 400 et 1000 g/m², en particulier entre 450 et 900 g/m².

La présente invention a également pour objet un procédé de fabrication d'un produit de surfaçage tel que décrit ci-avant. Ce procédé de fabrication comprend les étapes suivantes :
(i) Mise à disposition d'un voile de fibres de verre lié par un polymère organique,
(ii) Imprégnation d'une grille de fils de verre avec une composition d'imprégnation contenant un polymère organique constitué de 50 à 100 % en poids de PVDC ou d'un copolymère à base de chlorure de vinylidène, et de 0 à 50 % en poids d'un caoutchouc styrène-butadiène (SBR),
(iii) Mise en contact de la grille de fils de verre, imprégnée de la composition d'imprégnation, avec le voile de fibres de verre avant séchage ou réticulation complète de la composition d'imprégnation, de manière à obtenir un stratifié voile/grille avec une face « grille » et une face « voile »,
(iv) Dépôt, sur la face « grille » du stratifié voile/grille obtenu, d'une composition d'enduction contenant de 15 à 25 % en poids d'un polymère organique choisi parmi les caoutchoucs styrène-butadiène (SBR), les polymères acryliques, le poly(chlorure de vinylidène) (PVDC) homopolymère, les copolymères à base de chlorure de vinylidène et les mélanges d'au moins deux de ces polymères organiques, et de 75 à 85 % en poids de particules minérales, ces pourcentages étant rapportés au poids total de ces deux composants,
(v) Chauffage du stratifié voile/grille revêtu de manière à sécher et/ou réticuler totalement la composition d'enduction et de former un stratifié voile/grille recouvert sur la face « grille » d'un revêtement hydrophobe.

La composition d'imprégnation utilisée à l'étape (ii) est une dispersion aqueuse du ou des polymères organiques utilisés.

Un latex de PVDC est disponible par exemple sous la denomination de Diofan® A063, commercialisée par la société SolVin. Des latex d'élastomères SBR autoréticulants à groupes carboxylate anioniques sont disponibles par exemple sous la dénomination commerciale Litex^{®} S de la société Synthomer (Litex® S 10656, Litex^{®} S 9074 et Litex^{®} S 9076) ou sous la dénomination commerciale Rovène (Rovène 4019 et Rovène 4176) de la société Mallard Creeks Polymers.

L'imprégnation de la grille de fils de verre se fait de préférence par immersion de la grille dans la composition d'imprégnation. La grille de fils de verre imprégnée de la composition d'imprégnation est de préférence mise en contact avec le voile de fibres de verre immédiatement après l'étape (ii) d'imprégnation, et dans tous les cas avant le séchage ou la réticulation complète de la composition d'imprégnation.

L'ensemble grille de fils de verre/voile de verre est avantageusement soumis à une étape de durcissement de la colle, c'est-à-dire de la composition d'imprégnation. Cette étape de durcissement se fait par exemple par chauffage pendant 5 secondes à environ 5 minutes à une température comprise entre environ 180 °C et 230 °C.

L'étape de durcissement de la colle est facultative et il est tout à fait envisageable de mettre en œuvre l'étape (iv) de dépôt du revêtement hydrophobe immédiatement après l'étape (iii) de mise en contact de la grille avec le voile, sans étape de chauffage intermédiaire.

Le stratifié grille/voile durci peut recevoir le revêtement hydrophobe immédiatement après l'étape de chauffage, ou bien il peut être conservé pendant une longue période avant de recevoir le revêtement hydrophobe, par exemple pendant plusieurs jours ou mois.

L'étape (iv) du procédé selon l'invention comprend l'application d'une composition d'enduction sur la face « grille » du stratifié. Il est important que cette composition d'enduction n'imprègne pas totalement le voile de fibres de verre et laisse à nu la face du voile de verre qui n'est pas en contact avec la grille. La viscosité de la composition d'enduction est de préférence comprise entre 20 000 et 60 000 Pa.s au moment où elle vient en contact avec le stratifié grille/voile.

Grâce à cette technique d'application la composition d'enduction thixotrope reste sur la face « grille » tournée vers le haut et ne pénètre pas ou seulement partiellement le voile de verre. La rugosité de la face « voile » du stratifié de l'invention est par conséquent essentiellement la même à la fin de l'étape (iii) et à la fin de l'étape (v) du procédé selon l'invention.

La dernière étape du procédé (étape (v)) selon l'invention consiste à chauffer le stratifié enduit de la composition d'enduction. Ce chauffage se fait généralement par passage dans une étuve chauffée à une température comprise entre 180 °C et 230 °C, pendant environ 5 secondes à environ 5 minutes.

Le produit de surfaçage fini, issu du procédé décrit ci-dessus, est ensuite enroulé et utilisé pour la fabrication de plaques de plâtre à haute résistance mécanique.

La présente demande a également pour objet un procédé de fabrication d'une plaque de plâtre utilisant un produit de surfaçage de la présente invention.

La fabrication des plaques de plâtre est connue en soi. La plaque de plâtre est formée selon un procédé en continu qui consiste à mélanger du gypse calciné en poudre (hémihydrate de sulfate de calcium) avec de l'eau pour former une pâte qui est déposée en continu sur un produit de surfaçage ou entre deux produits de surfaçage.

Le produit formé est pressé pour obtenir l'épaisseur désirée, puis il est transporté en continu sur un convoyeur sur une distance permettant à la pâte d'atteindre un niveau de durcissement suffisant pour pouvoir être découpé en plaques de longueur déterminée. Les plaques sont ensuite séchées dans une étuve afin d'éliminer l'excès d'eau.

Classiquement, l'hémihydrate de sulfate de calcium (CaSO₄.0,5H₂O ; gypse calciné), qu'il soit naturel ou synthétique, subit une réaction d'hydratation en présence d'eau et se transforme en dihydrate de sulfate de calcium (CaSO₄.2H₂O : gypse).

La quantité de gypse calciné mis en oeuvre pour former la pâte varie généralement de 50 à 150 parts en poids pour 100 parts en poids d'eau et de préférence de 60 à 120 parts.

Les plaques de plâtre ont généralement une épaisseur comprise entre 8 mm et 40 mm, de préférence entre 10 mm et 30 mm.

Le procédé de fabrication d'une plaque de plâtre selon l'invention comprend ainsi l'application d'une pâte obtenue par mélange de gypse calciné en poudre avec de l'eau, sur la face « voile » d'un produit de surfaçage selon l'invention. Avant durcissement de la composition de plâtre, la composition de plâtre est de préférence recouverte par un deuxième produit de surfaçage selon l'invention, la face voile du deuxième produit de surfaçage étant toujours celle qui est en contact avec la couche de plâtre.

### Exemples

Différents stratifiés enduits d'un revêtement hydrophobe ont été préparés selon un même protocole.

Un voile de verre présentant une masse surfacique de 65 g/m² est imprégné par un rideau d'une solution d'une résine urée-formaldéhyde (Prefere® commercialisée par la société Dynea) à raison de 25 % en poids, rapporté au poids du voile lié final.

La solution de résine urée-formaldéhyde peut contenir 20 % en poids (matières sèches) d'agents retardateurs de flamme (10 % de boehmite (AlO(OH)), 10 % de brucite (Mg(OH)₂)).

Le voile imprégné est chauffé à 200 °C pendant environ 30 secondes.

Sur ce voile de verre on colle une grille de verre préalablement imprégnée avec une composition d'imprégnation (« colle ») à base de latex SBR carboxylé autoréticulant Litex^{®} S 9074 (Exemples comparatifs A et B) ou à base de latex PVDC Diofan® A063, commercialisée par la société SolVi (Exemples 1, 2 et 3).

Après durcissement du stratifié voile/grille ainsi obtenu, on applique sur la face « grille » du stratifié une composition d'enduction choisie parmi l'une des compositions d'enduction suivantes :

### Composition d'enduction 1 (Comp. 1)

| | |
|---|---|
| Latex | 166 g |
| Particules CaCO₃ hydrophobes | 645 g |
| Polyélectrolyte anionique (épaississant) | 2,3 g |
| Agent dispersant (tensioactif anionique) | 1,0 g |
| Emulsion de silicone (agent hydrophobisant) | 0,7 g |
| Eau | 270 g |

### Composition d'enduction 2 (Comp. 2)

| | |
|---|---|
| Latex | 83 g |
| Particules CaCO₃ hydrophobes | 645 g |
| Polyélectrolyte anionique (épaississant) | 2,3 g |
| Agent dispersant (tensioactif anionique) | 1,0 g |
| Emulsion de silicone (agent hydrophobisant) | 0,7 g |
| Eau | 320 g |

Le tableau 1 ci-après présente les valeurs de pouvoir calorifique supérieur (PCS), déterminées conformément à la norme EN ISO 1716 :2010, pour deux exemples comparatifs (A et B) et trois exemples selon l'invention (1, 2 et 3).

**Tableau 1**

| | Liant voile de verre | Composition « Colle » | Revêtement hydrophobe (g/m³) | Teneur en particules minérales du revêtement hydrophobe (%) | PCS (MJ/m²) |
|---|---|---|---|---|---|
| Exemple comparatif A | Résine urée formaldéhyde | SBR (21 g/m²) | 344 Comp.1 | 22 | 2,75 |
| Exemple comparatif B | Résine urée formaldéhyde | SBR (17 g/m²) | 447 Comp.1 | 22 | 2,69 |
| Exemple 1 | Résine urée formaldéhyde | PVDC (27 g/m²) | 359 Comp.2 | 11 | **1,44** |
| Exemple 2 | Résine UF + MgOH/AlOOH | PVDC (13 g/m²) | 348 Comp.1 | 22 | **1,72** |
| Exemple 3 | Résine UF + MgOH/AlOOH | PVDC (13 g/m²) | 311 Comp.2 | 11 | **1,00** |

Ces résultats montrent que la présence d'une proportion importante de PVDC dans la colle est indispensable à l'obtention d'un PCS satisfaisant.

On peut en outre noter qu'une augmentation de la teneur en particules minérales dans le revêtement hydrophobe se traduit par une diminution supplémentaire du PCS.

Enfin, la présence d'agents retardateurs de flamme dans le liant du voile de verre permet de réduire encore davantage le PCS.

## Revendications

1. Produit de surfaçage pour plaques de plâtre, comprenant un stratifié voile/grille avec une face « voile » et une face « grille », formé
(a) d'un voile de fibres de verre lié par un premier polymère organique, de préférence réticulé, appelé ci-après « liant » et
(b) d'une grille de fils de verre liée par un deuxième polymère organique, appelé ci-après « colle », constitué de 50 à 100 % en poids de PVDC ou d'un copolymère à base de chlorure de vinylidène, de 0 à 50 % en poids d'un caoutchouc styrène-butadiène (SBR), et de 0 à 30 % en poids d'une charge minérale, la grille de fils de verre étant collée au voile de fibres de verre au moyen de ladite colle,
le stratifié voile/grille étant revêtu, sur la face « grille », d'une couche continue d'un revêtement hydrophobe contenant
- de 8 à 25 % en poids, de préférence de 9 % à 20 % en poids, en particulier de 10 à 15 % en poids, d'un polymère organique choisi parmi les caoutchoucs styrène-butadiène (SBR), les polymères acryliques, le poly(chlorure de vinylidène) (PVDC), les copolymères à base de chlorure de vinylidène et les mélanges d'au moins deux de ces polymères organiques, et
- de 75 à 92 % en poids, de préférence de 80 à 91 % en poids et en particulier de 85 % à 90 % en poids, de particules minérales, ces pourcentages étant exprimés par rapport à la somme de ces deux composants,
ledit revêtement hydrophobe recouvrant la grille de fils de verre mais laissant à nu la face « voile » du stratifié.

2. Produit de surfaçage selon la revendication 1, **caractérisé par le fait que** le polymère organique liant le voile de fibres de verre est choisi parmi les résines urée-formaldéhyde, les résines mélamine-formaldéhyde, les résines phénol-formaldéhyde, les résines acryliques et les mélanges de ces résines, de préférence parmi les résines urée-formaldéhyde.

3. Produit de surfaçage selon l'une quelconque des revendications précédentes, **caractérisé par le fait que** le voile de verre non lié présente une masse surfacique comprise entre 20 et 200 g/m², de préférence entre 30 et 110 g/m².

4. Produit de surfaçage selon l'une quelconque des revendications précédentes, **caractérisé par le fait que** le voile de fibres de verre lié comprend entre 10 et 35 % en poids, de préférence entre 15 et 25 % en poids de liant, rapporté au poids total du voile de fibres de verre lié.

5. Produit de surfaçage selon l'une quelconque des revendications précédentes, **caractérisé par le fait que** le voile de fibres de verre lié présente une perméabilité à l'air, mesurée selon la norme NF EN ISO 9237, comprise entre 10 et 200 l/m²/s, de préférence entre 25 et 100 l/m²/s.

6. Produit de surfaçage selon l'une quelconque des revendications précédentes, **caractérisé par le fait que** les fibres de verre formant le voile de fibres de verre ont un diamètre compris entre 5 et 18 µm.

7. Produit de surfaçage selon l'une quelconque des revendications précédentes, **caractérisé par le fait que** la grille de fils de verre est un textile de verre tissé ou un tricot.

8. Produit de surfaçage selon l'une quelconque des revendications précédentes, **caractérisé par le fait que** le diamètre équivalent moyen des ouvertures de la grille de fils de verre est compris entre 2 mm et 12 mm, de préférence entre 3 et 10 mm.

9. Produit de surfaçage selon l'une quelconque des revendications précédentes, **caractérisé par le fait que** le caoutchouc styrène butadiène est un caoutchouc styrène-butadiène-méthacrylate autoréticulant portant des fonctions carboxylate anioniques.

10. Produit de surfaçage selon l'une quelconque des revendications précédentes, **caractérisé par le fait que** les particules minérales sont des particules de carbonate de calcium rendues hydrophobes par greffage de chaînes grasses.

11. Produit de surfaçage selon l'une quelconque des revendications précédentes, **caractérisé par le fait que** la masse surfacique du revêtement hydrophobe est comprise entre 280 et 500 g/m², de préférence entre 300 et 450 g/m², en particulier entre 310 et 400 g/m².

12. Procédé de fabrication d'un produit de surfaçage selon l'une quelconque des revendications précédentes, comprenant les étapes suivantes :
(i) Mise à disposition d'un voile de fibres de verre lié par un polymère organique,
(ii) Imprégnation d'une grille de fils de verre avec une composition d'imprégnation contenant un polymère organique constitué de 50 à 100 % en poids de PVDC ou d'un copolymère à base de chlorure de vinylidène, et de 0 à 50 % en poids d'un caoutchouc styrène-butadiène (SBR),
(iii) Mise en contact de la grille de fils de verre, imprégnée de la composition d'imprégnation, avec le voile de fibres de verre avant séchage ou réticulation complète de la composition d'imprégnation, de manière à obtenir un stratifié voile/grille avec une face « grille » et une face « voile »,
(iv) Dépôt, sur la face « grille » du stratifié voile/grille obtenu, d'une composition d'enduction contenant de 15 à 25 % en poids d'un polymère organique choisi parmi les caoutchoucs styrène-butadiène (SBR), les polymères acryliques, le poly(chlorure de vinylidène) (PVDC) homopolymère, les copolymères à base de chlorure de vinylidène et les mélanges d'au moins deux de ces polymères organiques, et de 75 à 85 % en poids de particules minérales, ces pourcentages étant rapportés au poids total de ces deux composants,
(v) Chauffage du stratifié voile/grille revêtu de manière à sécher et/ou réticuler totalement la composition d'enduction et de former un stratifié voile/grille recouvert sur la face « grille » d'un revêtement hydrophobe.

13. Procédé selon la revendication 12, **caractérisé par le fait que** la composition d'imprégnation de l'étape (ii) et la composition d'enduction de l'étape (iv) sont des compositions aqueuses, de préférence des latex.

14. Procédé selon la revendication 12, **caractérisé par le fait que** la rugosité de la face « voile » du stratifié est essentiellement la même à la fin de l'étape (iii) et à la fin de l'étape (v).

15. Procédé de fabrication d'une plaque de plâtre renforcée par un produit de surfaçage, comprenant l'application d'une pâte, obtenue par mélange de gypse calciné en poudre avec de l'eau, sur la face « voile » d'un produit de surfaçage selon l'une quelconque des revendications 1 à 11.

## Patentansprüche

1. Verkleidungselementprodukt für Gipsplatten, umfassend ein Vlies-/Gitterlaminat mit einer "Vlies"- und einer "Gitter"-Seite, gebildet aus
(a) einem Glasfaservlies, das durch ein erstes, vorzugsweise vernetztes, organisches Polymer, im Folgenden als "Bindemittel" bezeichnet, gebunden ist, und
(b) einem Glasfädengitter, das durch ein zweites organisches Polymer, im Folgenden als "Klebstoff" bezeichnet, gebunden ist, bestehend aus 50 bis 100 Gew.-% PVDC oder eines Copolymers auf der Basis von Vinylidenchlorid, aus 0 bis 50 Gew.-% eines Styrol-Butadien-Kautschuks (SBR) und aus 0 bis 30 Gew.-% eines mineralischen Füllstoffs, wobei das Glasfädengitter mittels des Klebstoffs mit dem Glasfaservlies verklebt ist,
wobei das Vlies-/Gitterlaminat auf der "Gitter"-Seite mit einer durchgehenden Schicht einer hydrophoben Beschichtung beschichtet ist, die Folgendes enthält
- von 8 bis 25 Gew.-%, vorzugsweise von 9 bis 20 Gew.-%, insbesondere von 10 bis 15 Gew.-%, ein organisches Polymer, ausgewählt aus Styrol-Butadien-Kautschuken (SBR), Acrylpolymeren, Poly(vinylidenchlorid) (PVDC), Copolymeren auf der Basis von Vinylidenchlorid und Mischungen aus mindestens zwei dieser organischen Polymere, und
- von 75 bis 92 Gew.-%, vorzugsweise von 80 bis 91 Gew.-% und insbesondere von 85 bis 90 Gew.-% mineralische Partikel, wobei diese Prozentsätze sich auf die Summe dieser zwei Komponenten beziehend ausgedrückt sind,
wobei die hydrophobe Beschichtung das Glasfädengitter bedeckt, die "Vlies"-Seite des Laminats aber unbedeckt lässt.

2. Verkleidungselementprodukt nach Anspruch 1, **dadurch gekennzeichnet, dass** das organische Polymer, das das Glasfaservlies bindet, aus Harnstoff-Formaldehyd-Harzen, Melamin-Formaldehyd-Harzen, Phenol-Formaldehyd-Harzen, Acrylharzen und Mischungen dieser Harze, vorzugsweise aus Harnstoff-Formaldehyd-Harzen ausgewählt ist.

3. Verkleidungselementprodukt nach einem der vorstehenden Ansprüche, **dadurch gekennzeichnet, dass** das ungebundene Glasvlies eine flächenbezogene Masse im Bereich zwischen 20 und 200 g/m², vorzugsweise zwischen 30 und 110 g/m² aufweist.

4. Verkleidungselementprodukt nach einem der vorstehenden Ansprüche, **dadurch gekennzeichnet, dass** das gebundene Glasfaservlies bezogen auf das Gesamtgewicht des gebundenen Glasfaservlieses zwischen 10 und 35 Gew.-%, vorzugsweise zwischen 15 und 25 Gew.-% Bindemittel, umfasst.

5. Verkleidungselementprodukt nach einem der vorstehenden Ansprüche, **dadurch gekennzeichnet, dass** das gebundene Glasfaservlies eine Luftdurchlässigkeit, gemessen gemäß der Norm NF EN ISO 9237, im Bereich zwischen 10 und 200 l/m²/s, vorzugsweise zwischen 25 und 100 l/m²/s, aufweist.

6. Verkleidungselementprodukt nach einem der vorstehenden Ansprüche, **dadurch gekennzeichnet, dass** die Glasfasern, die das Glasfaservlies bilden, einen Durchmesser im Bereich zwischen 5 und 18 µm besitzen.

7. Verkleidungselementprodukt nach einem der vorstehenden Ansprüche, **dadurch gekennzeichnet, dass** das Glasfädengitter ein gewebtes Glastextil oder ein Gestrick ist.

8. Verkleidungselementprodukt nach einem der vorstehenden Ansprüche, **dadurch gekennzeichnet, dass** der durchschnittliche äquivalente Durchmesser der Öffnungen des Glasfädengitters im Bereich zwischen 2 mm und 12 mm, vorzugsweise zwischen 3 und 10 mm, liegt.

9. Verkleidungselementprodukt nach einem der vorstehenden Ansprüche, **dadurch gekennzeichnet, dass** der Styrol-Butadien-Kautschuk ein selbstvernetzender Styrol-Butadien-Methacrylat-Kautschuk, der anionische Carboxylatfunktionen trägt, ist.

10. Verkleidungselementprodukt nach einem der vorstehenden Ansprüche, **dadurch gekennzeichnet, dass** die mineralischen Partikel Calciumcarbonatpartikel sind, die durch Pfropfung von Fettketten hydrophob gemacht wurden.

11. Verkleidungselementprodukt nach einem der vorstehenden Ansprüche, **dadurch gekennzeichnet, dass** die flächenbezogene Masse der hydrophoben Beschichtung im Bereich zwischen 280 und 500 g/m², vorzugsweise zwischen 300 und 450 g/m², insbesondere zwischen 310 und 400 g/m² liegt.

12. Verfahren zur Herstellung eines Verkleidungselementprodukts nach einem der vorstehenden Ansprüche, umfassend die folgenden Schritte:
(i) Bereitstellen eines Glasfaservlieses, das durch ein organisches Polymer gebunden ist,
(ii) Imprägnieren eines Glasfädengitters mit einer Imprägnierzusammensetzung, die ein organisches Polymer enthält, das aus 50 bis 100 Gew.-% PVDC oder eines Copolymers auf der Basis von Vinylidenchlorid, und aus 0 bis 50 Gew.-% eines Styrol-Butadien-Kautschuks (SBR) besteht,
(iii) Inkontaktbringen des mit der Imprägnierzusammensetzung imprägnierten Glasfädengitters mit dem Glasfaservlies vor dem Trocknen oder dem vollständigen Vernetzen der Imprägnierzusammensetzung sodass ein Vlies-/Gitterlaminat mit einer "Gitter"-Seite und einer "Vlies"-Seite erhalten wird,
(iv) Ablagern, auf der "Gitter"-Seite des erhaltenen Vlies-/Gitterlaminats, einer Überzugszusammensetzung, die von 15 bis 25 Gew.-% ein organisches Polymer, ausgewählt aus Styrol-Butadien-Kautschuken (SBR), Acrylpolymeren, Poly(vinylidenchlorid)-Homopolymer (PVDC-Homopolymer), Copolymeren auf der Basis von Vinylidenchlorid und Mischungen von mindestens zwei dieser organischen Polymere, und von 75 bis 85 Gew.-% mineralische Partikel enthält, wobei sich diese Prozentsätze auf das Gesamtgewicht dieser zwei Komponenten beziehen,
(v) Erwärmen des beschichteten Vlies-/Gitterlaminats, um die Überzugszusammensetzung zu trocknen und/oder vollständig zu vernetzen und ein Vlies-/Gitterlaminat zu bilden, das auf der "Gitter"-Seite mit einer hydrophoben Beschichtung beschichtet ist.

13. Verfahren nach Anspruch 12, **dadurch gekennzeichnet, dass** die Imprägnierzusammensetzung von Schritt (ii) und die Überzugszusammensetzung von Schritt (iv) wässrige Zusammensetzungen, vorzugsweise Latizes, sind.

14. Verfahren nach Anspruch 12, **dadurch gekennzeichnet, dass** die Rauhigkeit der "Vlies"-Seite des Laminats am Ende von Schritt (iii) und am Ende von Schritt (v) im Wesentlichen gleich ist.

15. Verfahren zum Herstellen einer mit einem Verkleidungselementprodukt verstärkten Gipsplatte, umfassend das Auftragen einer Paste, die durch Mischen von pulverförmigem kalziniertem Gips mit Wasser erhalten wird, auf die "Vlies"-Seite eines Verkleidungselementprodukts nach einem der Ansprüche 1 bis 11.

## Claims

1. Facing product for plasterboards, comprising a mat/mesh laminate with a "mat" face and a "mesh" face, formed
(a) of a glass fibre mat bonded by a first organic polymer, which is preferably crosslinked, referred to hereinbelow as "binder" and
(b) of a glass fibre mesh bonded by a second organic polymer, referred to hereinbelow as "adhesive", consisting of from 50% to 100% by weight of PVDC or of a copolymer based on vinylidene chloride, from 0 to 50% by weight of a styrene-butadiene rubber (SBR), and from 0 to 30% by weight of a mineral filler, the glass fibre mesh being adhesively bonded to the glass fibre mat by means of said adhesive,
the mat/mesh laminate being coated, on the "mesh" face, with a continuous layer of a hydrophobic coating containing
- from 8% to 25% by weight, preferably from 9% to 20% by weight, in particular from 10% to 15% by weight, of an organic polymer selected from styrene-butadiene rubbers (SBR), acrylic polymers, poly(vinylidene chloride) (PVDC), copolymers based on vinylidene chloride, and mixtures of at least two of these organic polymers, and
- from 75% to 92% by weight, preferably from 80% to 91% by weight and in particular from 85% to 90% by weight, of mineral particles, these percentages being expressed relative to the sum of these two components,
said hydrophobic coating covering the glass fibre mesh but leaving the "mat" face of the laminate bare.

2. Facing product according to Claim 1, **characterized in that** the organic polymer binding the glass fibre mat is selected from ureaformaldehyde resins, melamine-formaldehyde resins, phenol-formaldehyde resins, acrylic resins and mixtures of these resins, preferably from ureaformaldehyde resins.

3. Facing product according to either one of the preceding claims, **characterized in that** the unbonded glass mat has a surface density of between 20 and 200 g/m², preferably between 30 and 110 g/m².

4. Facing product according to any one of the preceding claims, **characterized in that** the bonded glass fibre mat comprises between 10% and 35% by weight, preferably between 15% and 25% by weight, of binder relative to the total weight of the bonded glass fibre mat.

5. Facing product according to any one of the preceding claims, **characterized in that** the bonded glass fibre mat has an air permeability, measured according to the NF EN ISO 9237 standard, of between 10 and 200 l/m²/s, preferably between 25 and 100 l/m²/s.

6. Facing product according to any one of the preceding claims, **characterized in that** the glass fibres forming the glass fibre mat have a diameter of between 5 and 18 µm.

7. Facing product according to any one of the preceding claims, **characterized in that** the glass fibre mesh is a woven glass textile or a knit.

8. Facing product according to any one of the preceding claims, **characterized in that** the mean equivalent diameter of the openings of the glass fibre mesh is between 2 mm and 12 mm, preferably between 3 and 10 mm.

9. Facing product according to any one of the preceding claims, **characterized in that** the styrene-butadiene rubber is a self-crosslinking styrene-butadiene-methacrylate rubber bearing anionic carboxylate functions.

10. Facing product according to any one of the preceding claims, **characterized in that** the mineral particles are calcium carbonate particles rendered hydrophobic by grafting of fatty chains.

11. Facing product according to any one of the preceding claims, **characterized in that** the surface density of the hydrophobic coating is between 280 and 500 g/m², preferably between 300 and 450 g/m², in particular between 310 and 400 g/m².

12. Process for manufacturing a facing product according to any one of the preceding claims, comprising the following steps:
(i) providing a glass fibre mat bonded by an organic polymer,
(ii) impregnating a glass fibre mesh with an impregnating composition containing an organic polymer consisting of from 50% to 100% by weight of PVDC or of a copolymer based on vinylidene chloride, and from 0 to 50% by weight of a styrene-butadiene rubber (SBR),
(iii) bringing the glass fibre mesh, impregnated with the impregnating composition, into contact with the glass fibre mat before complete crosslinking or drying of the impregnating composition, so as to obtain a mat/mesh laminate with a "mesh" face and a "mat" face,
(iv) depositing, on the "mesh" face of the resulting mat/mesh laminate, a coating composition containing from 15% to 25% by weight of an organic polymer selected from styrene-butadiene rubbers (SBR), acrylic polymers, polyvinylidene chloride (PVDC) homopolymer, copolymers based on vinylidene chloride, and mixtures of at least two of these organic polymers, and from 75% to 85% by weight of mineral particles, these percentages being expressed with respect to the total weight of these two components,
(v) heating the coated mat/mesh laminate so as to completely crosslink and/or dry the coating composition and form a mat/mesh laminate covered on the "mesh" face with a hydrophobic coating.

13. Process according to Claim 12, **characterized in that** the impregnating composition from step (ii) and the coating composition from step (iv) are aqueous compositions, preferably latices.

14. Process according to Claim 12, **characterized in that** the roughness of the "mat" face of the laminate is essentially the same at the end of step (iii) and at the end of step (v).

15. Process for manufacturing a plasterboard reinforced by a facing product, comprising the application of a paste, obtained by mixing powdered calcined gypsum with water, onto the "mat" face of a facing product according to any one of Claims 1 to 11.
